# EUROPEAN PATENT SPECIFICATION

(11) **EP 3 270 500 B1**
(45) Date of publication and mention of the grant of the patent: **29.04.2020**
(21) Application number: 15884396.1
(22) Date of filing: 26.10.2015
(51) Int. Cl.: H02M 1/00, F04D 27/00

(54) **CONTROL SYSTEM OF DIRECT-CURRENT FAN AND DIRECT-CURRENT FAN**
STEUERUNGSSYSTEM FÜR GLEICHSTROMLÜFTER SOWIE GLEICHSTROMLÜFTER
SYSTÈME DE COMMANDE DE VENTILATEUR À COURANT CONTINU ET VENTILATEUR À COURANT CONTINU

(30) Priority: 12.03.2015 CN 201510109251
(43) Date of publication of application: 17.01.2018
(73) Proprietor: GD Midea Environment Appliances MFG Co., Ltd., Dongfeng Town Zhongshan, Guangdong 528425 (CN); Midea Group Co., Ltd., Foshan, Guangdong 528311 (CN)
(72) Inventor: LI, Yiai, Zhongshan Guangdong 528425 (CN); LUO, Jianli, Zhongshan Guangdong 528425 (CN); CHEN, Can, Zhongshan Guangdong 528425 (CN)
(74) Representative: RGTH
(86) International application number: PCT/CN2015/092872
(87) International publication number: WO 2016/141718

(56) References cited:
- CN-A- 103 166 479
- CN-A- 104 653 504
- CN-U- 204 156 739
- JP-A- H10 283 045
- JP-A- 2002 019 232
- US-A1- 2006 006 246
- US-A1- 2011 018 479

## Description

### FIELD

The present disclosure relates to the field of household appliances, and more particularly, to a control system of a direct current (DC for short) fan and a DC fan.

### BACKGROUND

Standby power consumption is power consumption of a whole machine under a standby state that a power supply of the machine is connected to 230V mains supply and the machine is connected to all loads but does not start.

The standby power consumption in the DC fan with 24V low voltage in the related art reaches 1W nearly. With attentions paid to energy by human, it is required that the power consumption of an electronic device is less than 0.5W under the standby state. In the related art, the DC fan with low voltage controls on-off states of a 24V motor load through a MOS electronic switch, and disconnects the electronic switch for controlling the 24V motor in the standby state. However, the DC fans with low voltage have following disadvantages: 1) solution cost is high; 2) an impulse current is large when the motor starts, thereby easily damaging the electronic switch and shortening the service life of the electronic switch; and 3) Even if the 24V motor load is disconnected, a sum of the standby power consumption of a 24V power board and a control circuit of the fan is close to 0.5W, and a little fluctuation will cause the sum of the standby power consumption to exceed 0.5W, which is unstable.

The document JP 2002019232 A discloses an image forming apparatus that also includes the fan and a power supply where a driving load can be set to know when a door is closed to suppress power consumption when in a standby situation. To this end the apparatus comprises a first power supply means for use during a non-printing period and the second sour power supply means during printing.

In US 2006/006246 A1 and apparatus and a method for controlling fan operation is described. An included temperature sensor can detect an internal temperature and control the operation of the fan accordingly.

The system to control the rotary speed of the computer fan is described in US 2011/018479 A1 and the control can be adjusted depending on the type of fan used.

### SUMMARY

Embodiments of the present disclosure seek to solve at least one of the problems existing in the related art to at least some extent. Accordingly, embodiments of the present disclosure provide a control system of a DC fan and a DC fan. The invention is defined by the features of device claim 1. The dependent claims recite advantageous embodiments of the invention.

A control system of a DC fan, includes a switching power supply and a control circuit. The switching power supply is connected with a DC motor of the DC fan, and configured to convert an alternating current (AC for short) into a DC, and to output the DC to the DC motor. The control circuit is connected with the switching power supply and the DC motor respectively, and configured to output a working state signal to the switching power supply. The switching power supply is configured to output a corresponding working voltage to the DC motor according to the working state signal. The control circuit is configured to control a working state of the DC motor according to the working state signal.

In the above control system of the DC fan, the switching power supply outputs the corresponding working voltage to the DC motor according to the working state signal output by the control circuit, and the control system can set a corresponding standby voltage according to a standby power (such as the power less than 0.5W). Therefore, an overall standby power of the DC fan can be less than 0.5W. At the same time, the above control system also avoids using an electronic switch, and a service life of the control system is ensured.

In an embodiment according to the present invention, the switching power supply includes a switching power supply reference voltage circuit, a switching power supply sampling circuit, a pulse width modulation circuit, a high frequency switching transformer circuit, a mains supply inputting-rectifying-filtering circuit and a high frequency rectifying-filtering output circuit. An input end of the switching power supply reference voltage circuit is connected with an output end of the control circuit, and the switching power supply sampling circuit is connected between an output end of the switching power supply reference voltage circuit and an input end of the pulse width modulation circuit. An output end of the pulse width modulation circuit and an output end of the mains supply inputting-rectifying-filtering circuit are connected with the high frequency switching transformer circuit, and an output end of the high frequency switching transformer circuit is connected with the high frequency rectifying-filtering output circuit. The switching power supply sampling circuit is connected with a voltage output end of the switching power supply reference voltage circuit and the high frequency rectifying-filtering output circuit, and the voltage output end of the switching power supply reference voltage circuit is connected with the high frequency rectifying-filtering output circuit.

In an embodiment according to the present invention, the switching power supply reference voltage circuit includes a regulating resistor R1, a diode D1, resistors R2, R3, a capacitor C1 and a voltage regulator source IC1. One end of the regulating resistor R1 is connected with the output end of the control circuit, another end of the regulating resistor R1 is connected with a positive electrode of the diode D1, a negative electrode of the diode D1 is connected respectively with one end of the resistor R2, one end of the resistor R3 and a reference electrode of the voltage regulator source IC1. Another end of the resistor R2 is connected with the voltage output end of the switching power supply reference voltage circuit, and another end of the resistor R3 is connected with ground. One end of the capacitor C1 is connected with the reference electrode of the voltage regulator source IC1, another end of the capacitor C1 is connected with the output end of the switching power supply reference voltage circuit, a cathode of the voltage regulator source IC1 is connected with the output end of the switching power supply reference voltage circuit, and an anode of the voltage regulator source IC1 is connected with the ground. The working voltage output by the switching power supply is changed by adjusting a resistance value of the regulating resistor R1.

In an embodiment, the working voltage is less than or equal to 36 V.

In an embodiment, the voltage output by the switching power supply reference voltage circuit is determined by following formula: (Uo-Vef)/R2+(Vc-VD-Vef)/R1=Vef/R3, in which, Uo is the working voltage output by the switching power supply reference voltage circuit, Vef is a reference voltage of the voltage regulator source IC1, R2 is a resistance value of the resistor R2, R3 is a resistance value of the resistor R3, Vc is a voltage of the working state signal, and VD is a tube voltage drop of the diode D1.

In an embodiment, the switching power supply sampling circuit includes resistors R4, R5 and an optocoupler IC2. One end of the resistor R4 and a first end of the optocoupler IC2 are connected with an input end of the switching power supply sampling circuit, the input end of the switching power supply sampling circuit is connected with the output end of the switching power supply reference voltage circuit, and another end of the resistor R4 is connected respectively with a second end of the optocoupler IC2 and one end of the resistor R5. Another end of the resistor R5 is connected with the voltage output end of the switching power supply reference voltage circuit, a third end and a fourth end of the optocoupler IC2 are connected with the pulse width modulation circuit.

A DC fan, includes a control system of the DC fan and a DC motor, and the control system of the DC fan includes a switching power supply and a control circuit. The switching power supply is connected with the DC motor, and configured to convert an AC into a DC, and to output the DC to the DC motor. The control circuit is connected with the switching power supply and the DC motor respectively, and configured to output a working state signal to the switching power supply. The switching power supply is configured to output a corresponding working voltage to the DC motor according to the working state signal. The control circuit is configured to control a working state of the DC motor according to the working state signal.

In the above DC fan, the switching power supply outputs the corresponding working voltage to the DC motor according to the working state signal output by the control circuit, and the control system can set a corresponding standby voltage according to a standby power (such as the power less than 0.5W). Therefore, an overall standby power of the DC fan can be less than 0.5W. At the same time, the above DC fan also avoids using an electronic switch, and a service life of the DC fan is ensured.

In an embodiment, the switching power supply includes a switching power supply reference voltage circuit, a switching power supply sampling circuit, a pulse width modulation circuit, a high frequency switching transformer circuit, a mains supply inputting-rectifying-filtering circuit and a high frequency rectifying-filtering output circuit. An input end of the switching power supply reference voltage circuit is connected with an output end of the control circuit, and the switching power supply sampling circuit is connected between an output end of the switching power supply reference voltage circuit and an input end of the pulse width modulation circuit. An output end of the pulse width modulation circuit and an output end of the mains supply inputting-rectifying-filtering circuit are connected with the high frequency switching transformer circuit, and an output end of the high frequency switching transformer circuit is connected with the high frequency rectifying-filtering output circuit. The switching power supply sampling circuit is connected with a voltage output end of the switching power supply reference voltage circuit and the high frequency rectifying-filtering output circuit, and the voltage output end of the switching power supply reference voltage circuit is connected with the high frequency rectifying-filtering output circuit.

In an embodiment, the switching power supply reference voltage circuit includes a regulating resistor R1, a diode D1, resistors R2, R3, a capacitor C1 and a voltage regulator source IC1. One end of the regulating resistor R1 is connected with the output end of the control circuit, another end of the regulating resistor R1 is connected with a positive electrode of the diode D1, a negative electrode of the diode D1 is connected respectively with one end of the resistor R2, one end of the resistor R3 and a reference electrode of the voltage regulator source IC1. Another end of the resistor R2 is connected with the voltage output end of the switching power supply reference voltage circuit, and another end of the resistor R3 is connected with ground. One end of the capacitor C1 is connected with the reference electrode of the voltage regulator source IC1, another end of the capacitor C1 is connected with the output end of the switching power supply reference voltage circuit, a cathode of the voltage regulator source IC1 is connected with the output end of the switching power supply reference voltage circuit, and an anode of the voltage regulator source IC1 is connected with the ground. The working voltage output by the switching power supply is changed by adjusting a resistance value of the regulating resistor R1.

In an embodiment, the voltage output by the switching power supply reference voltage circuit is determined by following formula: (Uo-Vef)/R2+(Vc-VD-Vef)/R1=Vef/R3, in which, Uo is the working voltage output by the switching power supply reference voltage circuit, Vef is a reference voltage of the voltage regulator source IC1, R2 is a resistance value of the resistor R2, R3 is a resistance value of the resistor R3, Vc is a voltage of the working state signal, and VD is a tube voltage drop of the diode D1.

Additional aspects and advantages of embodiments of the present disclosure will be set forth in part in the following description, and in part will be apparent from the following description, or may be learned by practice of the embodiments of the present disclosure.

### BRIEF DESCRIPTION OF THE DRAWINGS

The foregoing and/or additional aspects and advantages of the embodiments of the present disclosure will become apparent and more readily appreciated from the following descriptions made with reference to the drawings, in which:
Fig. 1 is a block diagram of a DC fan according to a preferred embodiment of the present disclosure.
Fig. 2 is a block diagram of a switching power supply according to a preferred embodiment of the present disclosure.
Fig. 3 is a schematic diagram of a part circuit of a switching power supply according to a preferred embodiment of the present disclosure.

### DETAILED DESCRIPTION

Reference will be made in detail to embodiments of the present disclosure, examples of which are illustrated in the accompanying drawings. The same or similar elements and the elements having same or similar functions are denoted by like reference numerals throughout the descriptions. The embodiments described herein with reference to drawings are illustrative, and used to generally understand the present disclosure. The embodiments shall not be construed to limit the present disclosure.

In the description of the present disclosure, it should be understood that, terms such as "first" and "second" are used herein for purposes of description and are not intended to indicate or imply relative importance or significance or to imply the number of indicated technical features. Thus, the feature defined with "first" and "second" may comprise one or more of this feature. In the description of the present invention, "a plurality of' means two or more than two, unless specified otherwise.

In the description of the present disclosure, it should be understood that, unless specified or limited otherwise, the terms "mounted," "connected," and "coupled" are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

Various embodiments and examples are provided in the following description to implement different structures of the present disclosure. In order to simplify the present disclosure, certain elements and settings will be described. However, these elements and settings are only by way of example and are not intended to limit the present disclosure. In addition, reference numerals may be repeated in different examples in the present disclosure. This repeating is for the purpose of simplification and clarity and does not refer to relations between different embodiments and/or settings. Furthermore, examples of different processes and materials are provided in the present disclosure. However, it would be appreciated by those skilled in the art that other processes and/or materials may be also applied.

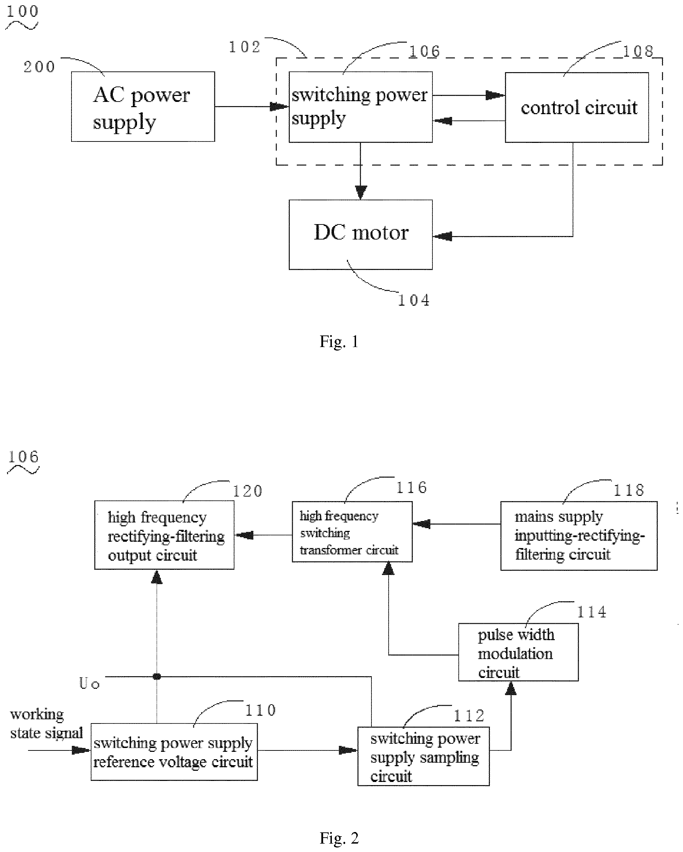

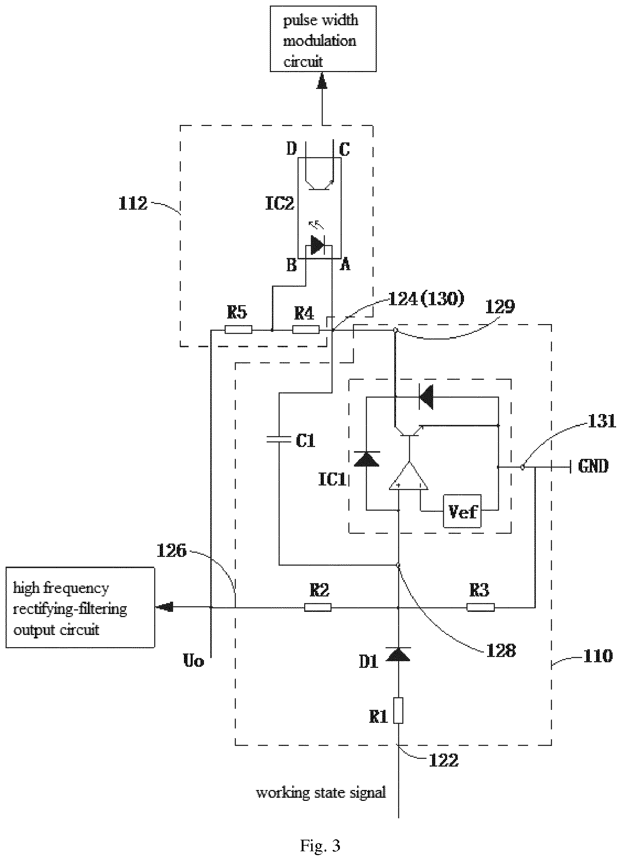

Please refer to Fig. 1~Fig. 3, a DC fan 100 of preferred embodiments of the present disclosure includes a control system 102 of the DC fan and a DC motor 104. In an embodiment, there is a 24V DC motor 104, and fan blades of the DC fan 100 can be mounted on a rotating shaft of the DC motor 104 and driven to rotate by the DC motor 104.

The control system 102 of the DC fan includes a switching power supply 106 and a control circuit 108.

The switching power supply 106 is connected with the DC motor 104, and is configured to convert an AC into a DC and to output the DC to the DC motor 104. As illustrated in Fig. 1, the switching power supply 106 may be connected with an AC power supply 200 with a voltage range of 110~240V (volt), such as an AC power supply with a voltage of 230V. In the embodiment, the switching power supply 106 can convert the AC of the AC power supply 200 into a 24V DC for using when the DC motor 104 is working. At the same time, the switching power supply 106 may also provide a voltage to the control circuit 108 for working.

The control circuit 108 is connected with the switching power supply 106 and the DC motor 104 respectively, and configured to output a working state signal to the switching power supply 106. In the embodiment, the working state signal is a power-on signal or a standby signal.

The switching power supply 106 is configured to output a corresponding working voltage to the DC motor 104 according to the working state signal. The working voltage may include an operating voltage of the DC motor 104 and a standby voltage of the DC motor 104. The working voltage can be less than or equal to 36V

For example, when the control circuit 108 outputs the power-on signal (a low-level signal with 0V), the switching power supply 106 outputs the corresponding working voltage to the DC motor 104 according to the power-on signal, such as the operating voltage of 24 V. When the control circuit 108 outputs the standby signal (a high-level signal with 5V), the switching power supply 106 outputs the corresponding working voltage to the DC motor 104 according to the standby signal, such as the standby voltage of 9∼11V or alternatively 10V.

The control circuit 108 is configured to control a working state of the DC motor 104 according to the working state signal. For example, the control circuit 108 outputs a PWM (Pulse Width Modulation) control signal to the DC motor 104 to control operating of the DC motor 104. When the working state signal is the power-on signal, the control circuit 108 controls the DC motor 104 to rotate according to the PWM control signal. When the working state signal is the standby signal, the control circuit 108 controls the DC motor 104 to stop rotating according to the PWM control signal.

Specifically, please refer to Fig. 2, the switching power supply 106 includes a switching power supply reference voltage circuit 110, a switching power supply sampling circuit 112, a pulse width modulation circuit 114, a high frequency switching transformer circuit 116, a mains supply inputting-rectifying-filtering circuit 118 and a high frequency rectifying-filtering output circuit 120.

An input end 122 of the switching power supply reference voltage circuit 110 is connected with an output end of the control circuit 108, and the switching power supply sampling circuit 112 is connected between an output end 124 of the switching power supply reference voltage circuit 110 and an input end of the pulse width modulation circuit 114.

An output end of the pulse width modulation circuit 114 and an output end of the mains supply inputting-rectifying-filtering circuit 118 are connected with the high frequency switching transformer circuit 116, and an output end of the high frequency switching transformer circuit 116 is connected with the high frequency rectifying-filtering output circuit 120.

The switching power supply sampling circuit 112 is connected with a voltage output end 126 of the switching power supply reference voltage circuit 110 and the high frequency rectifying-filtering output circuit 120, and the voltage output end 126 of the switching power supply reference voltage circuit 110 is connected with the high frequency rectifying-filtering output circuit 120.

In the embodiment, the control system 102 of the DC fan can change an output voltage Uo of the switching power supply reference voltage circuit 110 by changing parameters of the switching power supply reference voltage circuit 110. Therefore, specific circuit structures of the pulse width modulation circuit 114, the high frequency switching transformer circuit 116, the mains supply inputting-rectifying-filtering circuit 118 and the high frequency rectifying-filtering output circuit 120 are no longer described in detail.

The switching power supply reference voltage circuit 100 includes a regulating resistor R1, a diode D1, resistors R2, R3, a capacitor C1 and a voltage regulator source IC1.

One end of the regulating resistor R1 is connected with the output end of the control circuit 108, another end of the regulating resistor R1 is connected with a positive electrode of the diode D1, a negative electrode of the diode D1 is connected respectively with one end of the resistor R2, one end of the resistor R3 and a reference electrode of the voltage regulator source IC1.

Another end of the resistor R2 is connected with the voltage output end 126 of the switching power supply reference voltage circuit 110, and another end of the resistor R3 is connected with ground.

One end of the capacitor C1 is connected with the reference electrode 128 of the voltage regulator source IC1, another end of the capacitor C1 is connected with the output end 124 of the switching power supply reference voltage circuit 110, a cathode 129 of the voltage regulator source IC1 is connected with the output end 124 of the switching power supply reference voltage circuit110, and an anode 131 of the voltage regulator source IC1 is connected with the ground.

The larger a resistance value of the regulating resistor R1 is, the smaller the voltage output by the switching power supply reference voltage circuit 110 to the DC motor 104 is. The reference electrode 128 of the voltage regulator source IC1 is the reference electrode of an internal operational amplifier.

The switching power supply sampling circuit 112 includes resistors R4, R5 and an optocoupler IC2. One end of the resistor R4 and a first end A of the optocoupler IC2 are connected with an input end 130 of the switching power supply sampling circuit 112, the input end 130 of the switching power supply sampling circuit 112 is connected with the output end 124 of the switching power supply reference voltage circuit 110, and another end of the resistor R4 is connected respectively with a second end B of the optocoupler IC2 and one end of the resistor R5.

Another end of the resistor R5 is connected with the voltage output end 126 of the switching power supply reference voltage circuit 110, and a third end C and a fourth end D of the optocoupler IC2 are connected with the pulse width modulation circuit 114.

The voltage output by the switching power supply reference voltage circuit 110 can be determined by following formula: (Uo-Vef)/R2+(Vc-VD-Vef)/R1=Vef/R3, in which, Uo is the working voltage output by the switching power supply reference voltage circuit 110, Vef is a reference voltage of the voltage regulator source IC1, R2 is a resistance value of the resistor R2, R3 is a resistance value of the resistor R3, Vc is a voltage of the working state signal, and VD is a tube voltage drop of the diode D1.

The control principle of the above-mentioned control system 102 of the DC fan will be described below.

R2=154K Ω , R3=17.8K Ω, the model of the voltage regulator source IC1 is TL431, therefore, Vef=2.5V, the tube voltage drop VD=0.6V, the model of the optocoupler IC2 is 817C. In the power-on state, the control circuit 108 outputs the power-on signal (the low level signal with 0V) to the switching power supply 106. Therefore, the above formula becomes (Uo-Vef) / R2 = Vef / R3, and Uo = Vef (R2 + R3) / R3 = 24V.

In the standby state, the control circuit 108 outputs the power-on signal (the high level signal with 5V) to the switching power supply 106. Therefore, the formula (Uo-Vef) /R2+ (Vc-VD-Vef) /R1=Vef/R3 becomes:
(Uo-2.5V) /154K Ω + (5V-0.6V-2.5V) /R1=2.5V/17.8K Ω ;
that is, Uo=24.1V-292.6/R1 (2).

According to the formula (2), the working voltage Uo output by the switching power supply reference voltage circuit 110 can be changed by adjusting the resistance value of the regulating resistor R1. The larger the resistance value of the regulating resistor R1 is, the larger the working voltage Uo is, and the smaller the resistance value of the regulating resistor R1 is, the smaller the working voltage Uo is. That is, the working voltage output by the switching power supply reference voltage circuit 110 to the DC motor 104 can be adjusted by adjusting the resistance value of the regulating resistor R1. The smaller the output voltage is, the smaller standby power consumption is. Therefore, the standby power consumption of the entire DC fan 100 can be reduced to 0.5 W or less with decreasing of the voltage by adjusting the resistance value of the regulating resistor R1.

In the above DC fan 100, the switching power supply 106 outputs the corresponding working voltage to the DC motor 104 according to the working state signal output by the control circuit 108, the DC fan 100 can set a corresponding standby voltage according to a standby power (such as the power less than 0.5W). Therefore, an overall standby power of the DC fan 100 can be less than 0.5W. At the same time, the above DC fan 100 also avoids using an electronic switch, and a service life of the DC fan 100 is ensured.

Furthermore, a control solution of the DC fan 100 is simple, reliabilities of products can be improved, and costs can be reduced.

In the description of the present disclosure, reference terms "an embodiment," "some embodiments," "illustrative embodiment", "an example," "a specific example," or "some examples," means that a particular feature, structure, material, or characteristic described in connection with the embodiment or example is included in at least one embodiment or example of the present disclosure. Illustrative descriptions of above reference terms are not necessarily referring to the same embodiment or example of the present disclosure. Furthermore, the particular features, structures, materials, or characteristics may be combined in any suitable manner in one or more embodiments or examples.

Variations and modifications are possible within the scope of the appended claims.

## Claims

1. A control system (102) for a direct current, DC,
fan (100), comprising a switching power supply (106) and a control circuit (108), wherein,
the switching power supply (106) is connectable to a DC motor (104) of the DC fan (100),
and configured to convert an alternating current (AC) into a DC, and to output the DC to the DC motor (104);
the control circuit (108) is connected with the switching power supply (106) and is further connectable to the DC motor (104) respectively, and configured to output a working state signal to the switching power supply (106);
the switching power supply (106) is configured to output a corresponding working voltage (UO) to the DC motor (104) according to the working state signal;
the control circuit (108) is configured to control a working state of the DC motor (104) according to the working state signal,
the switching power supply (106) compnses a switching power supply reference voltage circuit (110), a switching power supply sampling circuit (112), a pulse width modulation circuit (114), a high frequency switching transformer circuit (116), a mams supply inputting-rectifying-filtering circuit (118) and a high frequency rectifying-filtering output circuit (120),
**characterized in that**,
an input end (122) of the switching power supply reference voltage circuit (110) is connected with an output end of the control circuit (108), and the switching power supply sampling circuit (112)
is connected between an output end (124) of the switching power supply reference voltage circuit (110) and an input end of the pulse width modulation circuit (114);
an output end of the pulse width modulation circuit (114) and an output end of the mains supply inputting-rectifying-filtering circuit (118) are connected with the high frequency switching transformer circuit (116), and an output end of the high frequency switching transformer circuit (116) is connected with the high frequency rectifying-filtering output circuit (120);
the switching power supply sampling circuit (112) is connected with a voltage output end (126) of the switching power supply reference voltage circuit (110) and the high frequency rectifying-filtering output circuit (120), and the voltage output end (126) of the switching power supply reference voltage circuit (110) is connected with the high frequency rectifying-filtering output circuit (120);
the switching power supply reference voltage circuit (110) comprises a regulating resistor (R1), a diode (D1), second and third resistors (R2, R3), a capacitor (C1) and a voltage regulator source (IC1);
one end of the regulating resistor (R1) is connected with the output end of the control circuit (108), another end of the regulating resistor (R1) is connected with a positive electrode of the diode (D1), a negative electrode of the diode (D1) is connected respectively with one end of the second resistor (R2), one end of the third resistor (R3) and a reference electrode of the voltage regulator source (IC1);
another end of the second resistor (R2) is connected with the voltage output end (126) of the switching power supply reference voltage circuit (110), and another end of the third resistor (R3) is connected with ground;
one end of the capacitor (C1) is connected with the reference electrode (128) of the voltage regulator source (ICl), another end of the capacitor (C1) is connected with the output end (124) of the switching power supply reference voltage circuit (110), a cathode (129) of the voltage regulator source (IC1) is connected with the output end (124) of the switching power supply reference voltage circuit (110), and an anode (131) of the voltage regulator source (IC1) is connected with the ground;
the working voltage (UO) output by the switching power supply is changed by adjusting a resistance value of the regulating resistor (R1),
wherein, the smaller the working voltage (UO) is, the smaller a standby power consumption of the entire DC fan (100) is.

2. The control system (102) according to claim 1, wherein the working voltage is less than or equal to 36 V.

3. The control system (102) according to claim 1, wherein, the voltage output by the switching power supply reference voltage circuit (110) is determined by following formula:
(Uo-Vef)/R2+(Vc-VD-Vef)/Rl=Vef/R3, where, Uo is the working voltage output by the switching power supply reference voltage circuit (110), Vef is a reference voltage of the voltage regulator source (ICl), R2 is a resistance value of the second resistor (R2), R3 is a resistance value of the third resistor (R3), Vc is a voltage of the working state signal, and VD is a tube voltage drop of the diode (D1).

4. The control system (102) according to claim 1, wherein the switching power supply sampling circuit (112) comprises fourth and fifth resistors (R4, R5) and an optocoupler (IC2);one end of the fourth resistor (R4) and a first end of the optocoupler (IC2) are connected with an input end (130) of the switching power supply sampling circuit (112), the input end (130) of the switching power supply sampling circuit (112) is connected with the output end (124) of the switching power supply reference voltage circuit (110), and another end of the fourth resistor (R4) is connected respectively with a second end of the optocoupler (IC2) and one end of the fifth resistor (R5);
another end of the fifth resistor (R5) is connected with the voltage output end (126) of the switching power supply reference voltage circuit (110), a third end (C) and a fourth end (D) of the optocoupler (IC2) are connected with the pulse width modulation circuit (114)

5. A direct current DC fan (100), comprising a control system (102) of the DC fan according to one of the preceding claims and a DC motor (104).

## Patentansprüche

1. Steuersystem (102) für einen Gleichstromlüfter (100), umfassend ein Schaltnetzteil (106) und eine Steuerschaltung (108), wobei
das Schaltnetzteil (106) mit einem Gleichstrommotor (104) des Gleichstromlüfters (100) verbindbar ist und konfiguriert ist, um einen Wechselstrom in einen Gleichstrom umzuwandeln und den Gleichstrom an den Gleichstrommotor (104) auszugeben;
die Steuerschaltung (108) mit dem Schaltnetzteil (106) verbunden ist und ferner entsprechend mit dem Gleichstrommotor (104) verbindbar ist und konfiguriert ist, um ein Arbeitszustandssignal an das Schaltnetzteil (106) auszugeben;
das Schaltnetzteil (106) konfiguriert ist, um eine entsprechende Arbeitsspannung (U0) an den Gleichstrommotor (104) gemäß dem Arbeitszustandssignal auszugeben;
die Steuerschaltung (108) konfiguriert ist, um einen Arbeitszustand des Gleichstrommotors (104) gemäß dem Arbeitszustandssignal zu steuern,
das Schaltnetzteil (106) eine Schaltnetzteil-Referenzspannungsschaltung (110), eine Schaltnetzteil-Abtastschaltung (112), eine Pulsweitenmodulationsschaltung (114), eine Hochfrequenz-Schalttransformatorschaltung (116), eine Netzversorgungseingabe-Gleichrichterfilterschaltung (118) und eine Hochfrequenz-Gleichrichterfilter-Ausgangsschaltung (120) umfasst,
**dadurch gekennzeichnet, dass** ein Eingangsende (122) der Schaltnetzteil-Referenzspannungsschaltung (110) mit einem Ausgangsende der Steuerschaltung (108) verbunden ist, und die Schaltnetzteil-Abtastschaltung (112) zwischen einem Ausgangsende (124) der Schaltnetzteil-Referenzspannungsschaltung (110) und einem Eingangsende der Pulsweitenmodulationsschaltung (114) verbunden ist;
ein Ausgangsende der Pulsweitenmodulationsschaltung (114) und ein Ausgangsende der Netzversorgungseingabe-Gleichrichterfilterschaltung (118) mit der Hochfrequenz-Schalttransformatorschaltung (116) verbunden sind, und ein Ausgangsende der Hochfrequenz-Schalttransformatorschaltung (116) mit der Hochfrequenz-Gleichrichterfilter-Ausgangsschaltung (120) verbunden ist;
die Schaltnetzteil-Abtastschaltung (112) mit einem Spannungsausgangsende (126) der Schaltnetzteil-Referenzspannungsschaltung (110) und der Hochfrequenz-Gleichrichterfilter-Ausgangsschaltung (120) verbunden ist und das Spannungsausgangsende (126) der Schaltnetzteil-Referenzspannungsschaltung (110) mit der Hochfrequenz-Gleichrichterfilter-Ausgangsschaltung (120) verbunden ist;
die Schaltnetzteil-Referenzspannungsschaltung (110) einen Regelwiderstand (R1), eine Diode (D1), zweite und dritte Widerstände (R2, R3), einen Kondensator (C1) und eine Spannungsreglerquelle (IC1) umfasst;
ein Ende des Regelwiderstands (R1) mit dem Ausgangsende der Steuerschaltung (108) verbunden ist, ein anderes Ende des Regelwiderstands (R1) mit einer positiven Elektrode der Diode (D1) verbunden ist, eine negative Elektrode der Diode (D1) jeweils mit einem Ende des zweiten Widerstands (R2), einem Ende des dritten Widerstands (R3) und einer Referenzelektrode der Spannungsreglerquelle (IC1) verbunden ist;
ein anderes Ende des zweiten Widerstands (R2) mit dem Spannungsausgangsende (126) der Schaltnetzteil-Referenzspannungsschaltung (110) verbunden ist, und ein anderes Ende des dritten Widerstands (R3) mit Masse verbunden ist;
ein Ende des Kondensators (C1) mit der Referenzelektrode (128) der Spannungsreglerquelle (IC1) verbunden ist, ein anderes Ende des Kondensators (C1) mit dem Ausgangsende (124) der Schaltnetzteil-Referenzspannungsschaltung (110) verbunden ist, eine Kathode (129) der Spannungsreglerquelle (IC1) mit dem Ausgangsende (124) der Schaltnetzteil-Referenzspannungsschaltung (110) verbunden ist und eine Anode (131) der Spannungsreglerquelle (IC1) mit Masse verbunden ist;
die von dem Schaltnetzteil ausgegebene Arbeitsspannung (U0) durch Einstellen eines Widerstandswerts des Regelwiderstands (R1) geändert wird,
wobei der Standby-Energieverbrauch des gesamten Gleichstromlüfters (100) umso kleiner ist, je kleiner die Arbeitsausgangsspannung (U0) ist.

2. Steuersystem (102) gemäß Anspruch 1, wobei die Arbeitsspannung kleiner oder gleich 36 V ist.

3. Steuersystem (102) gemäß Anspruch 1, wobei die von der Schaltnetzteil-Referenzspannungsschaltung (110) ausgegebene Spannung durch die folgende Formel bestimmt wird:
(Uo-Vef)/R2+(Vc-VD-Vef)/R1=Vef/R3, wobei Uo die von der Schaltnetzteil-Referenzspannungsschaltung (110) ausgegebene Arbeitsspannung ist, Vef eine Referenzspannung der Spannungsreglerquelle (IC1) ist, R2 ein Widerstandswert des zweiten Widerstands (R2) ist, R3 ein Widerstandswert des dritten Widerstands (R3) ist, Vc eine Spannung des Arbeitszustandssignals ist und VD ein Röhrenspannungsabfall der Diode (D1) ist.

4. Steuersystem gemäß Anspruch 1, wobei die Schaltnetzteil-Abtastschaltung (112) vierte und fünfte Widerstände (R4, R5) und einen Optokoppler (IC2) umfasst;
ein Ende des vierten Widerstands (R4) und ein erstes Ende des Optokopplers (IC2) mit einem Eingangsende (130) der Schaltnetzteil-Abtastschaltung (112) verbunden sind, das Eingangsende (130) der Schaltnetzteil-Abtastschaltung (112) mit dem Ausgangsende (124) der Schaltnetzteil-Referenzspannungsschaltung (110) verbunden ist und ein anderes Ende des vierten Widerstands (R4) jeweils mit einem zweiten Ende des Optokopplers (IC2) und einem Ende des fünften Widerstands (R5) verbunden ist;
ein anderes Ende des fünften Widerstands (R5) mit dem Spannungsausgangsende (126) der Schaltnetzteil-Referenzspannungsschaltung (110) verbunden ist, ein drittes Ende (C) und ein viertes Ende (D) des Optokopplers (IC2) mit der Pulsweitenmodulationsschaltung (114) verbunden sind.

5. Gleichstromlüfter (100), umfassend ein Steuersystem (102) des Gleichstromlüfters gemäß einem der vorhergehenden Ansprüche und einen Gleichstrommotor (104).

## Revendications

1. Système de contrôle (102) pour un ventilateur à courant continu CC (100) comprenant une alimentation à découpage (106) et un circuit de contrôle (108), dans lequel
l'alimentation à découpage (106) est connectable à un moteur CC (104) du ventilateur CC (100), et configurée pour convertir un courant alternatif (AC) en un courant continu (CC) et pour sortir le CC vers le moteur CC (104) ;
le circuit de contrôle (108) est connecté à l'alimentation à découpage (106) et est en outre connectable au moteur CC (104), respectivement, et configuré pour sortir un signal d'état de fonctionnement vers l'alimentation à découpage (106) ;
l'alimentation à découpage (106) est configurée pour sortir une tension de fonctionnement correspondante (U0) vers le moteur CC (104) conformément au signal d'état de fonctionnement ;
le circuit de contrôle (108) est configuré pour contrôler un état de fonctionnement du moteur CC (104) conformément au signal d'état de fonctionnement,
l'alimentation à découpage (106) comprend un circuit de tension de référence de l'alimentation à découpage (110), un circuit d'échantillonnage d'alimentation à découpage (112), un circuit de modulation de largeur d'impulsion (114), un circuit de transformateur de découpage à haute fréquence (116), un circuit de redressement-filtrage d'entrée d'alimentation secteur (118) et un circuit de sortie de redressement-filtrage haute fréquence (120),
**caractérisé en ce que**
une extrémité d'entrée (122) du circuit de tension de référence d'alimentation à découpage (110) est connectée à une extrémité de sortie du circuit de contrôle (108), et le circuit d'échantillonnage de l'alimentation à découpage (112) est connecté entre une extrémité de sortie (124) du circuit de tension de référence de l'alimentation à découpage (110) et une extrémité d'entrée du circuit de modulation de largeur d'impulsion (114) ;
une extrémité de sortie du circuit de modulation de largeur d'impulsion (114) et une extrémité de sortie du circuit de redressement-filtrage de l'entrée d'alimentation secteur (118) sont connectées au circuit de transformateur de découpage à haute fréquence (116), et une extrémité de sortie du circuit de transformateur de découpage à haute fréquence (116) est connectée au circuit de sortie de redressement-filtrage à haute fréquence (120) ;
le circuit d'échantillonnage de l'alimentation à découpage (112) est connecté à une extrémité de sortie de tension (126) du circuit de tension de référence de l'alimentation à découpage (110) et au circuit de sortie de redressement-filtrage haute fréquence (120), et l'extrémité de sortie de tension (126) du circuit de tension de référence de l'alimentation à découpage (110) est connectée au circuit de sortie de redressement-filtrage haute fréquence (120) ;
le circuit de tension de référence de l'alimentation à découpage (110) comprend une résistance de régulation (R1), une diode (D1), des deuxième et troisième résistances (R2, R3), un condensateur (C1), et une source de régulateur de tension (IC1) ;
une extrémité de la résistance de régulation (R1) est connectée à l'extrémité de sortie du circuit de contrôle (108), une autre extrémité de la résistance de régulation (R1) est connectée à une électrode positive de la diode (D1), une électrode négative de la diode (D1) est connectée respectivement à une extrémité de la deuxième résistance (R2), à une extrémité de la troisième résistance (R3) et à une électrode de référence de la source de régulateur de tension (IC1) ;
une autre extrémité de la deuxième résistance (R2) est connectée à l'extrémité de sortie de tension (126) du circuit de tension de référence de l'alimentation à découpage (110), et une autre extrémité de la troisième résistance (R3) est connectée à la terre ;
une extrémité du condensateur (C1) est connectée à l'électrode de référence (128) de la source de régulateur de tension une autre extrémité du condensateur (C1) est connectée à l'extrémité de sortie (124) du circuit de tension de référence de l'alimentation à découpage (110), une cathode (129) de la source de régulateur de tension (IC1) est connectée à l'extrémité de sortie (124) du circuit de tension de référence de l'alimentation à découpage (110), et une anode (131) de la source de régulateur de tension (ICI) est connectée à la terre ;
la tension de fonctionnement (U0) sortie par l'alimentation à découpage est modifiée en ajustant la valeur de résistance de la résistance de régulation (R1),
dans lequel plus la tension de fonctionnement (UO) est faible, plus la consommation totale en veille du ventilateur CC (100) est faible.

2. Système de contrôle (102) selon la revendication 1, dans lequel la tension de fonctionnement est inférieure ou égale à 36 V.

3. Système de contrôle (102) selon la revendication 1, dans lequel la sortie de tension du circuit de tension de référence de l'alimentation à découpage (110) est déterminée par la formule suivante :
(Uo - Vef) / R2 + (Vc - VD - Vef) / R1 = Vef / R3, où Uo est la tension de fonctionnement sortie par le circuit de tension de référence de l'alimentation à découpage (110), Vef est une tension de référence de la source de régulateur de tension R2 est une valeur de résistance de la deuxième résistance (R2), R3 est une valeur de résistance de la troisième résistance (R3), Vc est la tension du signal d'état de fonctionnement, et VD est une chute de tension de tube de la diode (D1).

4. Système de contrôle (102) selon la revendication 1, dans lequel le circuit d'échantillonnage de l'alimentation à découpage (112) comprend des quatrième et cinquième résistances (R4, RS) et un photocoupleur (C2) ;
une extrémité de la quatrième résistance (R4) et une première extrémité du photocoupleur (IC2) sont connectées à une extrémité d'entrée (130) du circuit d'échantillonnage de l'alimentation à découpage (112), l'extrémité d'entrée (130) du circuit d'échantillonnage de l'alimentation à découpage (112) est connectée à l'extrémité de sortie (124) du circuit de tension de référence de l'alimentation à découpage (110), et une autre extrémité de la quatrième résistance (R4) est connectée respectivement à une deuxième extrémité du photocoupleur (IC2) et à une extrémité de la cinquième résistance (R5) ;
une autre extrémité de la cinquième résistance (R5) est connectée à l'extrémité de sortie de tension (126) du circuit de tension de référence de l'alimentation à découpage (110), une troisième extrémité (C) et une quatrième extrémité (D) du photocoupleur (1C2) sont connectées au circuit de modulation de largeur d'impulsion (114).

5. Ventilateur à courant continu CC (100) comprenant un système de contrôle (102) du ventilateur CC selon l'une des revendications précédentes et un moteur CC (104).
